# EUROPEAN PATENT APPLICATION

(11) **EP 0 939 569 A1**
(43) Date of publication of application: **01.09.1999**
(21) Application number: 98301245.1
(22) Date of filing: 19.02.1998
(51) Int. Cl.: H04Q 7/38, H04B 7/26, H04B 7/185

(54) **Control information distribution in a TDMA mobile communication system**

(71) Applicant: ICO Services Ltd., London W6 9BN (GB)
(72) Inventor: Grayson, Mark, Chiswick, London, W4 2QT (GB); Chomet, Patrick, London, NW2 3SN (GB); Mullins, Dennis Roy, London, SE11 5UL (GB)
(74) Representative: Geary, Stuart Lloyd

(57) **Abstract**

In order to avoid the need for a mobile station (4) to continuously decode information in a broadcast control channel in a cellular telephone system, an alert channel is used to indicate when information in the broadcast control channel has changed. The mobile station (4) decodes the information in the alert channel and, if a change in the broadcast control information is indicated, it then decodes the information in the broadcast control channel. The message in the alert channel may indicate which part of the broadcast control information has changed so that the mobile station (4) need only decode the part that has changed.

Mobile stations (4) may be allocated to different groups. When the network becomes congested, the alert channel, or a similar channel, is used to transmit the identities of the mobile station groups that currently have access to the network. The groups having access are cyclically changed so that access to the network is fairly rationed between subscribers.

## Description

The present invention relates to a method of distributing control information in a TDMA mobile telephone system and a mobile station for such a mobile telephone network.

In mobile telephone systems, it is known to broadcast control information messages in a broadcast control channel. In a TDMA system, one message may be spread over a plurality of time slots. A mobile station must continuously receive and decode this control information to ensure that it operates correctly with the network. However, it is wasteful of battery life for a mobile station to repeatedly decode the same information.

A solution to this problem is to transmit alert messages to inform a mobile station that the control information has changed.

According to the present invention, there is provided a method of distributing control information in a TDMA mobile telephone system, the method comprising transmitting a control information message, respective portions of said message being transmitted in time slots of different frames, and transmitting an alert message, shorter than the control information message, which indicates that the content of the control information message has changed.

Preferably, the alert message fits in one time slot and is repeated in successive frames. Repeating the alert message in this way means that mobile station battery life can be conserved further by arranging for the mobile station to intermittently or randomly monitor for alert messages.

Preferably, the alert message identifies a part of the control information message which has changed. As a result, a mobile station need not waste power receiving and decoding parts of the control information message that have not changed. More preferably, the alert message is transmitted from the time of the change for a predetermined period. This period is set so that all mobile stations to which the message relates will have an opportunity to receive it, even if they do not monitor the alert channel in every frame.

Advantageously, no power is radiated during the alert message time slots when no alert message is being sent.

The present invention finds particular, but not exclusive, application in a satellite mobile telephone system.

According to the present invention, there is also provided a mobile station for a mobile telephone network operating in accordance with a method according to any preceding claim, the mobile station including receiving means and processing means, wherein the processing means controls the receiving means to receive control information messages and alert information messages and the processing means is operable to decode and act on a portion of a control information message in dependence on a received alert information message.

According to the present invention, there is further provided a method of operating a a TDMA mobile telephone system, the method comprising determining that the demand for traffic channels has reached a predetermined threshold level, transmitting access class data, receiving the access class data at a mobile station, and enabling or disabling the mobile station's ability to request a traffic channel in dependence on whether an access class allocated to the mobile station is included in said access class data, wherein the access class data fits in one time slot and cyclically identifies different access classes.

Advantageously, no power is radiated in said time slot if no access class data is being transmitted therein.

Conveniently, data indicating that access class data is being sent is transmitted in a broadcast control channel.

According to the present invention, there is still further provided a mobile station for a mobile telephone network operating in accordance with a method according to the present invention, the mobile station including receiving means and processing means, wherein the processing means controls the receiving means to receive access class data and the processing means is operable to determine whether an access class allocated to the mobile station is included in said access class data and enable or disable the mobile station's ability to request a traffic channel in dependence on said determination.

Embodiment of the present invention will now be described, by way of example, with reference to the accompanying drawings, in which:
Figure 1 illustrates a satellite mobile telephone system;
Figure 2 shows a mobile station;
Figure 3 is a schematic diagram of a satellite access node of the system of Figure 1;
Figure 4 is a data flow diagram for the system of Figure 1;
Figure 5 shows the parts of the TDMA frame structure of the system of Figure 1 that are relevant to the present invention; and
Figure 6 shows a mobile station moving between two cells.

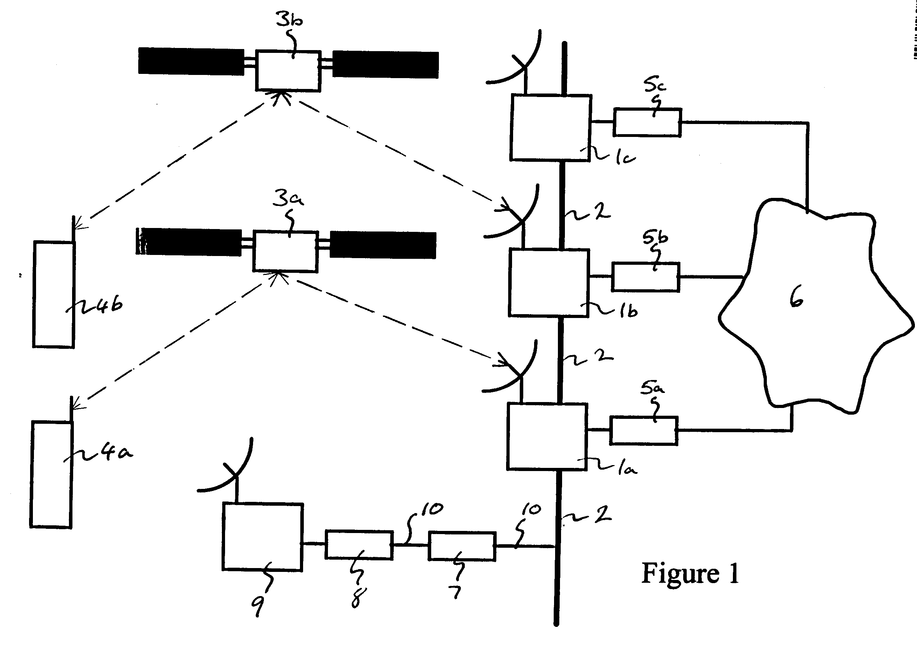

Referring to Figure 1, a satellite mobile telephone system comprises a plurality of satellite access nodes 1a, 1b, 1c interconnected by a high capacity digital network 2 (hereinafter "the backbone network"), a plurality of satellites 3a, 3b, a plurality of a mobile stations 4a, 4b, gateway mobile satellite switching centres 5a, 5b, 5c providing connections between the satellite access nodes 1a, 1b, 1c and other networks 6, a network management centre 7, a satellite control centre 8 and a tracking, telemetry and control station 9. The network management centre 7, the satellite control centre 8 and the tracking, telemetry and control station 9 are interconnected by a lower capacity digital network 10 which is also connected to the backbone network 2. The other networks 6 comprise the public switched telephone network (PSTN), cellular telephone networks and the like.

The satellite control centre 8 and the tracking, telemetry and control station 9 control the operation of the satellites 3a, 3b, for instance setting transmit power levels and transponder input tuning, as directed by the network management centre 7. Telemetry signals from the satellites 3a, 3b are received by the tracking, telemetry and control station 9 and processed by the satellite control centre 8 to ensure that the satellites 3a, 3b are functioning correctly.

The satellites 3a, 3b repeatedly broadcast control information in broadcast control channels (BCCH). A mobile station 4a repeatedly receives and decodes the information in the broadcast control channel broadcast by the satellite 3a, 3b currently serving it. The broadcast control channel includes information regarding the frequencies used for the served cell and access classes. Access classes will be described below. Alert messages, signalling changes in the broadcast control information, are broadcast in their own alert channel.

During a telephone call, a mobile station 4a, 4b communicates with a satellite 3a, 3b via a half duplex channel comprising a downlink channel and an uplink channel. The channels comprise TDMA time slots on frequencies allocated on initiation of the call or re-allocated during a call.

The satellites 3a, 3b are in non-geostationary orbits and comprise generally conventional satellites, such as the known Hughes HS601 model, and may include features as disclosed in GB-A-2288913. Each satellite 3a, 3b is arranged to generate an array of beams covering a footprint beneath the satellite, each beam including a number of different frequency channels and time slots.

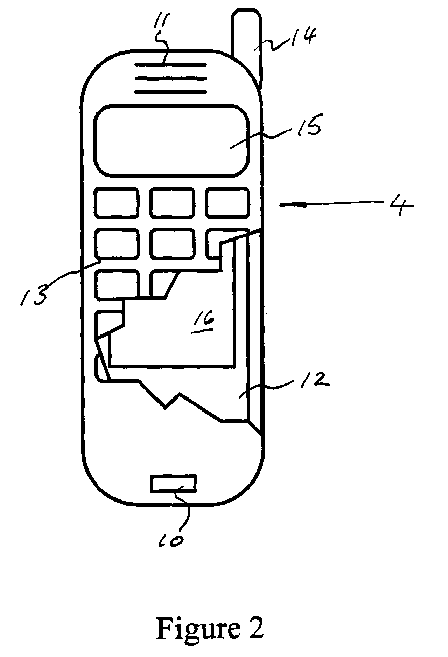

Referring to Figure 2, a mobile station 4 is generally similar to the units presently available for GSM networks and comprises a codec, a controller 16, a microphone 10, a loudspeaker 11, a battery 12, a keypad 13, a radio frequency interface, an antenna 14, a display 15 and subscriber identification module (SIM) smart card.

The codec comprises a low bit-rate coder, which generates a speech bit stream at 3.6 kbits/s, together with a channel coder, which applies error correction codes to the speech bit stream to produce an encoded bit stream at 4.8 kbits/s. The low bit-rate coder is a linear predictive coder. The channel coder uses Viterbi coding. The codec also comprises complementary decoders.

The SIM includes a processor and a non-volatile memory which stores data identifying the subscriber and data for use in encrypted communication.

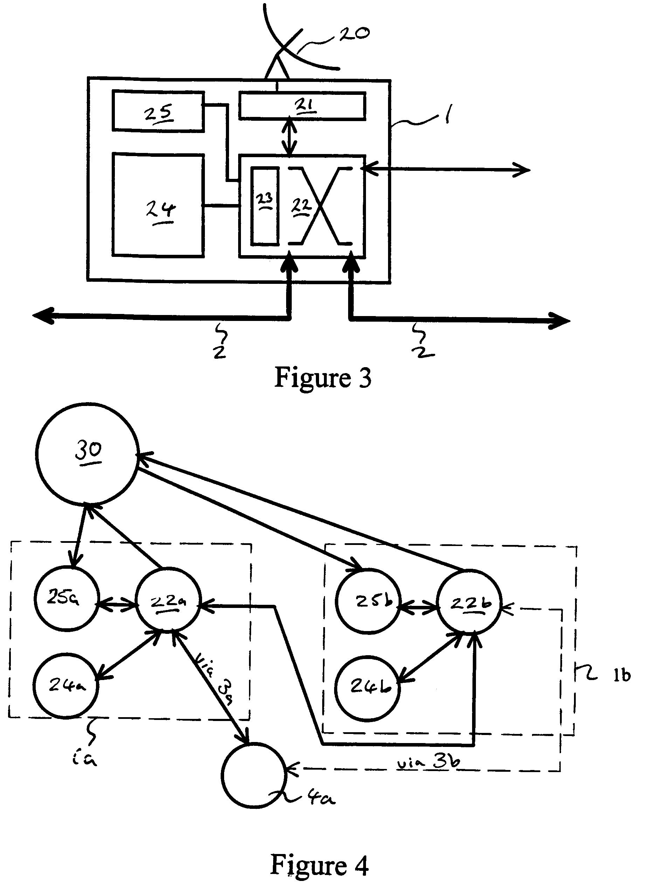

Referring to Figure 3, a satellite access node 1 comprises a dish antenna 20 mounted for tracking satellites, transmitter and receiver circuits 21 including amplifiers, multiplexers, demultiplexers and codecs, a visited mobile satellite switching centre 22 including a controller 23, a visitor location register 24 and a voice mail box unit 25. The mobile satellite switching centre 22 is coupled for communications signals to the backbone network 2, to a gateway and to the transmitter and receiver circuits 21. The controller 23 is coupled for data signals to the visitor location register 24 and the voice mail box unit 25 and may also send and receive data signals via the backbone network 2.

The controller 23 responds to addresses on incoming communications signals, from the antenna 20, the gateway and the backbone network 2, by controlling the mobile satellite switching centre 22 to output the communications signals on the appropriate paths to their destinations, i.e. the antenna 20, the gateway or the backbone network 2.

The visitor location register 24 maintains a record of each of the subscribers registered with the satellite access node 1. The voice mail box unit 25 provides storage space for voice mail messages for subscribers.

Referring to Figure 4, a database 30, called the home location register, contains records relating to each mobile station 4a, 4b. The record contains the mobile station's identity (International Mobile Subscriber Identity or IMS), the current status of the mobile station (whether it is "local" or "global" as will be described in greater detail below), the geographical position of the mobile station, the home mobile satellite switching centre with which the mobile station is registered (to enable billing and other data to be collected at a single point), the currently active satellite access node with which the mobile station is in communication via a satellite, an individual enciphering key and the address of an associated voice mail box unit location.

The home location register 30 may be located in the network management centre 7 (see Figure 1) or may be distributed among the satellite access nodes 1a, 1b, 1c (see Figure 1).

Referring to Figures 1 to 4, a mobile station 4a may be registered with one of two distinct statuses; "local" in which the mobile station 4a is permitted to communicate only through one local area or part of the satellite system network, and "global", which entitles the mobile station 4a to communicate through any part of the satellite mobile telephone system.

The mobile station 4a performs an automatic registration process (location update), of the kind well known in the art of cellular terrestrial communications, on each occasion when the mobile station 4a is switched on, and periodically whilst the mobile station 4a is operating. As is conventional, the registration process takes the form of transmitting of a signal identifying the mobile station 4a (e.g. by transmitting its telephone number on a common hailing or signalling channel).

The transmitted signal is picked up by one or more of the satellites 3a, 3b. Under normal circumstances, the signal is picked up by a plurality of satellites 3a, 3b, and the received signal strength or time of arrival are transmitted, together with the identity of the mobile station 4a and the identity of the satellite 3a, 3b receiving the signal, to the home location register 30 via the visited mobile satellite switching centres 22a, 22b of the satellite access nodes 1a, 1b for which the satellites 3a, 3b are in communication.

The home location register 30 calculates, on the basis of the received-signal arrival times, the terrestrial position of the mobile station 4a which is then stored in the mobile station's record. When it is necessary to communicate with the mobile station, the identity of the satellite access node 1a, 1b, 1c most suitable for communicating with the mobile station 4a is determined. This is typically done by comparing the stored position of the mobile station 4a with the positions of each of the satellite access nodes 1a, 1b, 1c and selecting the nearest. However, account may also or instead be taken of the strengths of the signals received via the satellites 3a, 3b, or of other factors such as network congestion which may result, in borderline cases, in the selection of a satellite access node 1a, 1b, 1c which is not geographically closest to the mobile station 4a. The identity of the allocated satellite access node 1a is then stored in the mobile station's record in the visitor location register 25a of the visited mobile satellite switching centre 22a where the mobile station 4a is registered. The information stored in the visitor location register 25a is used for routing mobile terminated calls to the mobile station 4a.

When a mobile terminated call is made to the mobile station 4a, it is directed to the visited mobile satellite switching centre 22a at which the mobile station 4a is registered. The visited mobile satellite switching centre 22a causes a paging signal to be sent to the cells where the called mobile station 4a is expected to be, i.e. via the satellites 3a, 3b serving cells covering the mobile station's location. When the mobile station 4a receives the paging signal, it enters into a dialogue with the network to obtain a channel for the call. If the mobile station 4a does not respond to the paging signal, the network will inform the calling party that the mobile station 4a cannot be reached.

In addition to speech traffic, the mobile satellite telephone system supports the sending of short text messages that are displayed on the displays 15 of the mobile stations 4. When such a message is sent to the mobile station 4a, it is directed to the visited mobile satellite switching centre 22a at which the mobile station 4a is registered. The visited mobile satellite switching centre 22a causes a paging signal to be sent to the cells where the called mobile station 4a is expected to be. When the mobile station 4a receives the paging signal, it enters into a dialogue with the network and receives the message. If the mobile station 4a does not respond to the paging signal, the message is stored at the visited mobile satellite switching centre 22a and a flag is set in the home location register 30 to indicate that a message is waiting for the mobile station 4a.

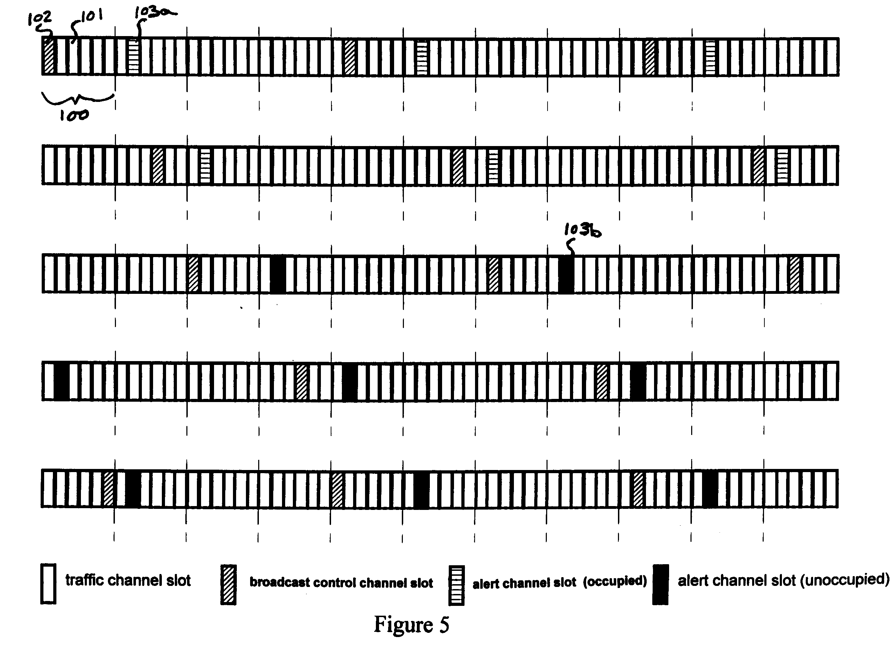

Referring to Figure 5, each TDMA frame 100 transmitted to a cell comprises six time slots. Each time slot of a frame may be occupied by a traffic channel 101, a broadcast control channel slot 102 or an alert channel slot 103a, 103b. When no alert message is being transmitted, no power is radiated during the alert channel slot 103b.

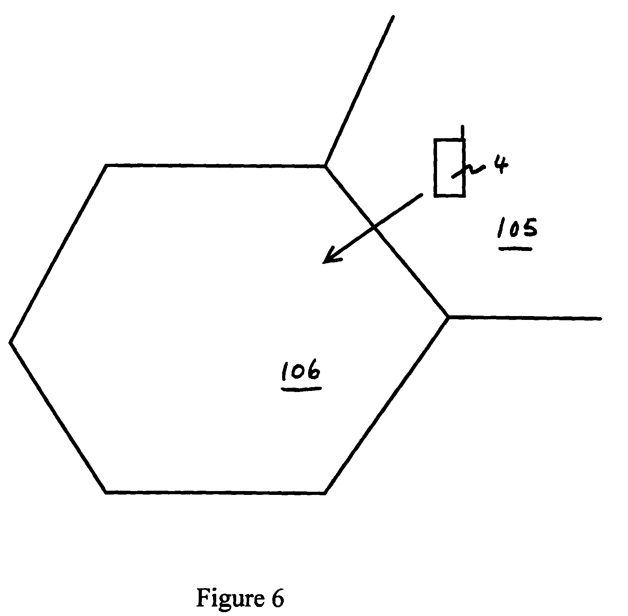

Referring to Figure 6, a first cell 105 and a second cell 106 are defined by separate beams from a satellite 3a (see Figure 1). A mobile station 4 moves between the first and second cells 105, 106 by virtue of its own movement relative to the earth surface and/or the movement of the cells 105, 106 across the earth surface. Although the cells are shown as having sharp boundaries, in practice the beams overlap at their peripheries.

The mobile station 4 has knowledge of the movement of the cells 105, 106 across the earth's surface and from this knowledge it predicts a time at which the boundary between the first cell 105 and the second cell 106 approaches it. If the mobile station 4 is not engaged in a call, it will wake itself up shortly before the predicted crossing time and identify the cell 106 it should now be entering using an internal map of relative cell positions.

Because of the cell dimensions, the station 4 may be situated in a cell 105 for 20 minutes. In order to conserve power, it is desirable that the mobile station does not repeatedly decode broadcast control channel information 103a in an attempt to identify whether the broadcast control information has been updated. Instead, it is required to attempt to receive the alert information 103b repeatedly at intervals of, typically, 30 seconds. This will then be used by the network to indicate that critical broadcast control information 103a has changed.

Having woken up, the mobile station 4 then scans the broadcast control channel frequencies for the cell 105 that it is leaving and the cell 106 that it expects to be entering. If initially, broadcast control channel for the current cell 105 is not received, the mobile station 4 determines that it has moved and starts scanning at all broadcast control channel frequencies to determine which it should now use and then performs a registration routine, or locating update, with the network.

If the broadcast control channel for the current cell 105 is found, the mobile station 4 monitors the broadcast control channel frequency for the cell 106 it expects to be entering, until the broadcast control channel for the new cell 106 is detected or the broadcast control channel for the current cell 105 is lost. If the broadcast control channel for the current cell is lost without the broadcast control channel for the new cell appearing, the mobile station 4 determines that it has itself moved and scans all broadcast control channel frequencies to determine which it should now use and performs a location update with the network.

If the mobile station 4 is receiving the broadcast control channels for the first and second cells 105, 106, the signal strengths of the broadcast control channels are compared until they are approximately equal. If the time when the two broadcast control channels are the same strength differ significantly from the predicted departure time, the mobile station 4 determines that it is moved and performs the location update so that the network becomes aware of its new location.

If the broadcast control channel for the second cell 106 is received as expected, the mobile station 4 does not perform a location update with the network.

When the signal strength of the broadcast control channel for the second cell 106 becomes stronger than that for the first cell 105, the mobile station 4 receives and decodes the control information in the broadcast control channel. This information includes cell movement location which enables the mobile station 4 to predict when it will leave the second cell 106. Once the broadcast control channel information has been decoded, the mobile station ceases to monitor the broadcast control channel. However, the mobile station 4 will monitor the alert channel. Under unchanging circumstances, no power is radiated in the alert channel slots and consequently, the mobile station's controller does not need to process any information.

By way of example, it will be assumed that the frequencies used in the second cell 106 are to be changed while the mobile station 4 is in the second cell 106. The change in frequencies may be necessary because of local interference. The control information, broadcast in the broadcast control channel, is amended to specify the new frequencies for the second cell 106. Referring to Figure 5, at the same time, alert information is transmitted in the alert channel. The alert information informs the mobile station 4 that it must decode the frequency allocation part of the control information. In the present example, the alert information is transmitted for 30 seconds to ensure that the mobile station 4 will receive it. Thereafter, no power is radiated in the alert channel slots.

Meanwhile, the mobile station 4 receives the alert information which is decoded by the mobile station's controller. The controller determines that there has been a change to the frequency allocation information in the control information and controls the mobile station to receive the broadcast control channel bursts containing the frequency allocation information. When this information has been received, it is decoded by the mobile station's controller which then retunes the mobile station's synthesiser.

It can be seen that both frequency allocations need only be operated in parallel for two transmissions of the broadcast control information because any mobile stations 4 in the second cell 106 when the change is made will have been alerted to the change and decoded the broadcast control channel and retunes during this period and any mobile stations for arriving after the change will obtain the new control information when they decode the broadcast control information on entering the second cell 106.

If the alert channel were not being used, the new and old broadcast control information would need to be transmitted simultaneously for a period corresponding the time taken for the cell in question to pass over a point on the earth's surface.

The alert channel, or a channel having similar characteristics, may be employed in the provision of congestion control. When the network is very busy, there may not be sufficient channels to handle all of the calls that subscribers wish to make. If this situation arises, it is desirable that all of the subscribers have the same chance of being allocated a traffic channel.

Each mobile station is allocated a congestion control code, for example, a digit in the sequence 0 to 9. This code is stored in the SIMs of the mobile stations.

When the network determines that the demand for traffic channels reaches predetermined threshold level, it changes the state of a congestion control bit in the broadcast control information. The congestion control bit is detected by any mobile stations in the cell. It begins to cyclically transmit congestion control codes in the alert channel. A mobile station attempting to access the system, for instance to set up a call or perform a location update, repeatedly decodes the alert channel information and compares the access classes identified in the alert channel with its own access class, stored in its SIM. If the mobile station's access class is not among those notified in the alert channel, the mobile station will refrain from accessing the system and not transmit a request for a traffic channel. If, however, its access class is among those received in the alert channel, it requests a traffic channel, e.g. in response to a user attempting to place a call.

## Claims

1. A method of distributing control information in a TDMA mobile telephone system, the method comprising transmitting a control information message, respective portions of said message being transmitted in time slots of different frames, and transmitting an alert message, shorter than the control information message, which indicates that the content of the control information message has changed.

2. A method according to claim 1, wherein the alert message fits in one time slot and is repeated in successive frames.

3. A method according to claim 1 or 2, wherein the alert message identifies a part of the control information message as having changed.

4. A method according to claim 3, wherein the alert message is transmitted from the time of said change for a predetermined period.

5. A method according to claim 4, wherein no power is radiated during the alert message time slots when no alert message is being sent.

6. A method according to any preceding claim, wherein the control information message and the alert information message are transmitted via a satellite.

7. A mobile station for a mobile telephone network operating in accordance with a method according to any preceding claim, the mobile station including receiving means and processing means, wherein the processing means controls the receiving means to receive control information messages and alert information messages and the processing means is operable to decode and act on a portion of a control information message in dependence on a received alert information message.

8. A method of operating a mobile station in a TDMA mobile telephone system, the method comprising determining that the demand for traffic channels has reached a predetermined threshold level, transmitting access class data, receiving the access class data at a mobile station, and enabling or disabling the mobile station's ability to request a traffic channel in dependence on whether an access class allocated to the mobile station is included in said access class data, wherein the access class data fits in one time slot and cyclically identifies different access classes

9. A mobile station for a mobile telephone network operating in accordance with a method according to claim 8, the mobile station including receiving means and processing means, wherein the processing means controls the receiving means to receive access class data and the processing means is operable to determine whether an access class allocated to the mobile station is included in said access class data and enable or disable the mobile station's ability to request a traffic channel in dependence on said determination.
